# EUROPÄISCHE PATENTSCHRIFT

(11) **EP 1 549 926 B1**
(45) Veröffentlichungstag und Bekanntmachung des Hinweises auf die Patenterteilung: **07.09.2016**
(21) Anmeldenummer: 03769352.0
(22) Anmeldetag: 07.10.2003
(51) Int. Cl.: G01N 15/02, G01N 15/14

(54) **VERFAHREN ZUR REDUZIERUNG DER DURCHFLUSSABHÄNGIGKEIT VON MESSGERÄTEN UND ZUGEHÖRIGE VORRICHTUNG**
METHOD FOR REDUCING FLOW DEPENDENCE OF MEASURING APPLIANCES AND ASSOCIATED DEVICE
PROCEDE POUR REDUIRE LA DEPENDANCE DE DEBIT D'APPAREILS DE MESURE ET DISPOSITIF ASSOCIE

(30) Priorität: 10.10.2002 DE 10247353
(43) Veröffentlichungstag der Anmeldung: 06.07.2005
(73) Patentinhaber: HYDAC FILTERTECHNIK GMBH, 66280 Sulzbach/Saar (DE)
(72) Erfinder: KLEBER, Jörg, 66538 Neunkirchen (DE)
(74) Vertreter: Bartels, Martin Erich Arthur
(86) Internationale Anmeldenummer: PCT/EP2003/011040
(87) Internationale Veröffentlichungsnummer: WO 2004/036192

(56) Entgegenhaltungen:
- EP-A- 0 536 080
- EP-A- 1 039 289
- EP-A2- 0 427 908
- DE-A- 4 110 231
- DE-A- 19 932 825
- DE-C- 19 735 066
- US-A- 5 561 520
- Terence Allen: "Particle Size Measurement", 1997, Chapman & Hall, London ISBN: 0-412-72950-4 vol. 1 * page 358 *
- Renliang Xu: "Particle Characterization: Light Scattering Methods", 2000, Kluwer Academic Publishers, Dordrecht ISBN: 1-792-36300-0 * page 187 - page 188 *

## Beschreibung

Die Erfindung betrifft ein Verfahren zur Reduzierung der Durchflußabhängigkeit von Meßgeräten zur Bestimmung von Verunreinigungen gemäß der Merkmalsausgestaltung des Oberbegriffes des Patentanspruches 1.

Die herkömmlich zum Einsatz kommenden Meßtechnikverfahren verfolgen teilweise den Ansatz, alle Partikel, die die jeweilige Meßstelle passieren, zu erfassen, wobei die Lichtstrahlquerschnittsfläche regelmäßig erzeugt von einem Lasersensor des Partikelzähler - Sensors vorhangartig sich über die gesamte Breite der Meßzelle erstreckt, durch die der Fluidstrom geleitet wird. Es ergibt sich mithin bei den bekannten Lösungen quer zur Fluidstromrichtung und über deren gesamte Breite eine strichartige, dünne Lichtstrahlquerschnittsfläche und der Sensor zur Meßwerterfassung spricht jeweils an, sobald ein Partikel den dahingehenden Lichtvorhang passiert.

Es hat sich nun gezeigt, dass bei den bekannten Lösungen, die derart aufbauen, um Partikel mit einer Größe von ungefähr 2*µ*m noch detektieren zu können, die Lichtstrahlabmessung in Strömungsrichtung nur noch wenige *µ*m betragen darf, um in dieser Feinheit Verschmutzungen erfassen zu können. Hieraus ergeben sich in Verbindung mit den zur Verhinderung von Partikel - Sedimentationen in den Zuleitungen erforderlichen Strömungsgeschwindigkeiten Partikelsignale mit einer Dauer von nur ungefähr 1 *µ*s. Letzteres erfordert dann eine sehr große Bandbreite für die nachgeordneten Verstärkerstufen und bei nicht ausreichender Bandbreite muß der Durchfluß und damit die Signalfrequenz in einem engen Bereich konstant gehalten werden, was meßtechnisch sehr aufwendig und kostenintensiv ist. Ein weiterer Nachteil des linienförmigen Lichtstrahles des Partikelzähler - Sensors in Verbindung mit der konventionellen Technik der Partikelgrößenbestimmung, bei der sich die Detektierung der Partikelgröße aus dem Maximalwert des Signals ergibt, beruht auf der Tatsache, dass die Partikelabmessung nur in den Achsrichtungen bestimmt werden kann, in denen die Partikelabmessung die Ausdehnung des Strahles nicht übersteigt, d.h. in Strömungsrichtung gesehen ist dies mit einem linienförmigen Lichtstrahl praktisch nicht mehr möglich. In Richtung der optischen Achse ist darüber hinaus bei noch so großem meßtechnischem Aufwand eine Detektierung überhaupt nicht mehr möglich.

Demgegenüber ist aus der Druckschrift "Renliang Xu: Particle Characterization: Light Scattering Methods, 2000, Kluwer Academic Publishers, Dordrecht" ein Verfahren zur Bestimmung der Größe und Anzahl von Partikeln in einem Fluid mit einem Partikel - Sensor bekannt, der in einer Meßzelle angeordnet ist, die einen vorgebbaren Eintrittsquerschnitt für den Fluidstrom aufweist, wobei der Sensor eine durchgehende Lichtstrahlquerschnittsfläche erzeugt, über die der Fluidstrom geführt wird, wobei in Richtung des Fluidstromes die ununterbrochene Erstreckung der Lichtstrahlquerschnittsfläche größer gewählt wird als quer dazu bezogen auf die Eintrittsstelle der Partikel in die Lichtstrahlquerschnittsfläche, die mittels einer zylindrischen Linse in der Art eines Kreises ausgebildet ist. Der Partikelsensor arbeitet nach dem Lichtblockade - Prinzip, wobei von den hinsichtlich Größe und Anzahl zu bestimmenden Partikeln ein Teil des Lichts zum Lichtempfänger blockiert wird, so dass von demselben ein negativer Stromimpuls produziert wird, dessen Amplitude direkt mit der Partikelgröße korreliert.

Ferner ist aus der Druckschrift "Terence Allen: Particle Size Measurement, 1997, Chapman & Hall, London, Bd. 12" ein Partikel - Sensor zur Bestimmung nur der Partikelgröße bekannt, der ebenfalls eine Lichstrahlquerschnittsfläche erzeugt, die in der Art eines Kreises ausgebildet ist.

Durch die DE 199 11 654 C1 ist eine gattungsfremde Einrichtung zur Bestimmung der Geschwindigkeit und der Größe von Partikeln bekannt in transparenten Medien oder im Vakuum, wobei die Partikel in einem Meßvolumen mit Primärlicht einer Beleuchtungseinrichtung beleuchtet werden und das durch die Partikel beeinflußte Licht wird auf zwei Lichtempfänger abgebildet, die nebeneinander in Bewegungsrichtung der Partikel angeordnet und auf optoelektronische Wandler geführt sind, und wobei aus Zeitmessungen der der Passage der Lichtempfänger durch die Partikel entsprechenden Ausgangssignale der Wandler die Geschwindigkeit und die Größe der Partikel bestimmt wird. Dabei wird vorzugsweise eine kreisförmige Lichtempfangsfläche des ersten Lichtempfängers konzentrisch von einer weiteren kreisringförmigen Lichtempfangsfläche des zweiten Lichtempfängers umgeben, und jedem Lichtempfänger ist ein optoelektronischer Wandler zugeordnet oder in weiterer Ausgestaltung dieser Lösung werden in Nebeneinanderordnung und voneinander getrennt eine Vielzahl an kreisförmigen Lichtempfangsflächen mit entsprechend konzentrischem Aufbau angeordnet. Bei der bekannten Lösung werden also mehrere Lichtstrahlquerschnittsflächen in räumlich getrennter Anordnung voneinander eingesetzt, was bei der bekannten Lösung zu einem hohen gerätetechnischen Aufwand führt und Verfälschungen im Meßergebnis aufgrund des komplizierten Aufbaues sind nicht auszuschließen.

Durch die DE 199 32 825 A ist ein Verfahren zur Reduzierung der Durchflußabhängigkeit von Meßgeräten zur Bestimmung von Verunreinigungen, insbesondere Feststoffverschmutzungen, in der Art von Partikeln in Fluiden mit einem Partikelzähler-Sensor bekannt, der insbesondere nach dem Lichtblockade-Prinzip arbeitet und der in einer Meßzelle angeordnet ist, die einen vorgebbaren Eintrittsquerschnitt für den Fluidstrom aufweist, wobei der Sensor nur eine einzige durchgehende Lichtstrahlquerschnittsfläche erzeugt, über die zur Erkennung der Verunreinigung der Fluidstrom geführt wird. Ferner ist es durch diese Veröffentlichung bekannt, dass in Richtung des Fluidstromes die ununterbrochene Erstreckung der Lichtstrahlquerschnittsfläche gleich oder größer gewählt wird als quer dazu bezogen auf die Eintrittsstelle der Verunreinigung in die Lichtstrahlquerschnittsfläche. Aufgrund der durchführbaren gleichzeitigen Durchfluß-Berechnung, die auch bei kleinsten Fließgeschwindigkeiten mit hoher Genauigkeit erfolgen kann, ist davon auszugehen, dass der Nachweis der Partikel (Tracer-Partikel) weitgehend durchflußunabhängig erfolgt. Die Anwendung dieses optischen Meßverfahrens erfolgt mit einem parallelen Beleuchtungslichtbündel und mit räumlich strukturierten Empfängern für die Bestimmung der Fluidgeschwindigkeit, so dass insoweit wiederum ein gewisser gerätetechnischer Aufwand vorliegt.

Die DE 197 35 066 C1 betrifft ein gattungsgemäßes Verfahren zur Reduzierung der Durchflußabhängigkeit von Meßgeräten zur Bestimmung von Verunreinigungen, insbesondere Feststoffverschmutzungen in der Art von Partikeln in Fluiden mit einem Partikelzähler - Sensor, der insbesondere nach dem Lichtblockade - Prinzip arbeitet und der in einer Meßzelle angeordnet ist, die einen vorgebbaren Eintrittsquerschnitt für den Fluidstrom aufweist, wobei der Sensor nur eine einzige, durchgehende Lichtstrahlquerschnittsfläche erzeugt, über die zur Erkennung der Verunreinigung der Fluidstrom geführt wird, wobei die Aufbereitung eines Sensorsignals so durchgeführt wird, dass innerhalb eines vorgegebenen Zeitraums die individuellen Verweilzeiten der Partikel in der Meßzone in Form der Lichtstrahlquerschnittsfläche ermittelt werden, und wobei durch Summation der Verweilzeiten ein Summensignal als Rohsignal gebildet und dieses unter Berücksichtigung zumindest eines Kalibrierfaktors zur Darstellung des Anzeigewertes benutzt wird

Ausgehend von diesem Stand der Technik liegt der Erfindung die Aufgabe zugrunde, ein Verfahren zur Reduzierung der Durchflußabhängigkeit von Meßgeräten sowie eine Vorrichtung zum Durchführen des Verfahrens zur Verfügung zu stellen, die die beschriebenen Nachteile nicht aufweisen und die es insbesondere ermöglichen, mit geringem gerätetechnischen Aufwand zu verbesserten Meßansätzen für eine Partikelverschmutzung zu gelangen. Eine dahingehende Aufgabe löst ein Verfahren mit den Merkmalen des Patentanspruches 1 sowie eine Vorrichtung mit den Merkmalen des Patentanspruches 9.

Das erfindungsgemäße Verfahren ist dadurch charakterisiert, dass die Lichtstrahlquerschnittsfläche des Partikelzähler-Sensors nach allen Seiten gleichförmig verlaufend ausgebildet wird, insbesondere in der Art eines Quadrats, eines Ovals oder vorzugsweise in der Art eines Kreises und dass in Richtung des Fluidstromes die ununterbrochene Erstreckung der Lichtstrahlquerschnittsfläche deutlich größer gewählt wird als quer dazu zumindest bezogen auf die Eintrittsstelle der Verunreinigung in die Lichtstrahlquerschnittsfläche, und dass die Erstreckung der Lichtstrahlquerschnittsfläche quer zur Richtung des Fluidstromes deutlich kleiner ist als die Breite des Fluidstromes in dieser Richtung.

Damit ergibt sich eine Lichtstrahlquerschnittsfläche, vorzugsweise über einen konventionellen Laser erzeugt, des Partikelzähler - Sensors, die nicht den kompletten Öffnungsquerschnitt der Meßzelle ausleuchtet, dafür aber in Strömungsrichtung eine deutlich größere Ausdehnung hat mit der Folge, dass auch ausgesprochen kleine Partikel, beispielsweise mit einer Größe von 2*µ*m, noch ohne weiteres detektiert werden können, ohne dass, wie beschrieben, der nachgeordnete gerätetechnische Meßaufwand vom Aufwand her erhöht ist. Da die Lichtstrahlquerschnittsfläche bei dem erfindungsgemäßen Verfahren nach allen Seiten gleichförmig verlaufend ausgebildet wird, ist die Verweildauer des jeweiligen detektierten Partikels innerhalb der Lichtstrahlquerschnittsfläche deutlich erhöht, was die meßtechnische Auswertung deutlich erleichtert und bei ausgesprochen kleinen Partikeln die Detektion überhaupt erst möglich macht. Fehler, die gegebenenfalls dadurch entstehen können, dass die detektierten Partikel vom Lichtstrahl nur teilweise angestrahlt werden, sind in der technischen Praxis vernachlässigbar und spielen praktisch keine Rolle.

Darüber hinaus ist es mit dem erfindungsgemäßen Verfahren möglich, bei sehr schneller Abtastung des Meßsignals bei bekannter Strömungsgeschwindigkeit des Fluidstromes die Partikelabmessung auch in Strömungsrichtung bestimmen zu können. Dies ermöglicht eine wesentlich bessere Messung der Verhältnisse, insbesondere bei länglichen Verschmutzungspartikeln, wozu in günstiger Weise mit beiträgt, dass nur eine einzige durchgehende Lichtstrahlquerschnittsfläche vorhanden ist. Die Partikelgröße ist dabei definiert als Durchmesser eines Kreises mit gleicher Fläche wie die Projektion des beliebig geformten Partikels und ein linienförmiger Strahlquerschnitt gemäß den bekannten Lösungen erlaubt keine Größenbestimmung gemäß dieser Definition allein aus dem Maximum des Meßsignals. Bei dem erfindungsgemäßen Verfahren hingegen kann durch die Abtastung des Partikels eine Aussage über die Partikelgeometrie gemacht werden, beispielsweise ob das Partikel eine eher runde oder längliche Ausdehnung hat. Dahingehend erhaltene Informationen lassen weitergehende Schlüsse auf die Art der jeweiligen Verschmutzung zu, wobei es mit dem erfindungsgemäßen Verfahren sogar möglich ist, Luftblasen innerhalb des Fluidstromes, beispielsweise im Hydrauliköl, zu detektieren. Bei der herkömmlichen Technik wurden Luftblasen bisher nur als große Verschmutzungspartikel erkannt und durch die höhere Gewichtung großer Partikel wurde das Meßergebnis dadurch häufig stark verfälscht.

Bei dem erfindungsgemäßen Verfahren wird die Lichtstrahlquerschnittsfläche des Partikelzähler - Sensors nach allen Seiten gleichförmig verlaufend ausgebildet, insbesondere in der Art eines Quadrats, eines Ovals oder vorzugsweise in der Art eines Kreises.

Bei einer bevorzugten Ausführungsform des erfindungsgemäßen Verfahrens wird der Eintrittsquerschnitt der Meßzelle derart bemessen, dass eine Verstopfung durch die eintretenden Verschmutzungspartikel vermieden wird. Vorzugsweise werden dabei die durch den Partikelzähler - Sensor erfaßten Rohsignale, die sich bei Durchströmen der Lichtstrahlquerschnittsfläche ergeben, an eine Signalverarbeitungseinrichtung weitergeleitet und es kann eine meßtechnische Verarbeitung der ermittelten Rohsignale durchgeführt werden.

Die Erfindung betrifft darüber hinaus eine Vorrichtung zum Durchführen des Verfahrens, wobei die Vorrichtung eine Meßzelle mit vorgebbarem Eintrittsquerschnitt für das Fluid aufweist und wobei der in der Meßzelle angeordnete Partikelzähler - Sensor nur eine einzige, durchgehende Lichtstrahlquerschnittsfläche erzeugt. Die Vorrichtung ist erfindungsgemäß dadurch charakterisiert, dass die Lichtstrahlquerschnittsfläche nach allen Seiten gleichförmig verlaufend ausgebildet ist, insbesondere in der Art eines Quradrats, eines Ovals oder vorzugsweise in der Art eines Meßkreises, die in Richtung des Fluidstromes mit ihrer ununterbrochenen Erstreckungsrichtung deutlich größer gewählt ist als quer dazu zumindest bezogen auf die Eintrittsstelle der jeweiligen Verunreinigung (Partikel) in die Lichtstrahlquerschnittsfläche und dass die Erstreckung der Lichtstrahlquerschnittsfläche quer zur Richtung des Fluidstromes deutlich kleiner ist als die Breite des Fluidstromes in dieser Richtung.

Im Folgenden werden das erfindungsgemäße Verfahren sowie die Vorrichtung anhand eines Ausführungsbeispiels nach den Figuren näher erläutert. Dabei zeigen in prinzipieller und nicht maßstäblicher Darstellung die
- Fig.1: die Lichtstrahlquerschnittsfläche eines bekannten Partikelzähler-Sensors in der Art eines linienförmigen Lichtvorhanges sowie nach der Erfindung mit einer kreisförmigen Sensorfläche;
- Fig.2: eine Auswerteschaltung für den Erhalt von Meßergebnissen nach dem erfindungsgemäßen Verfahren.

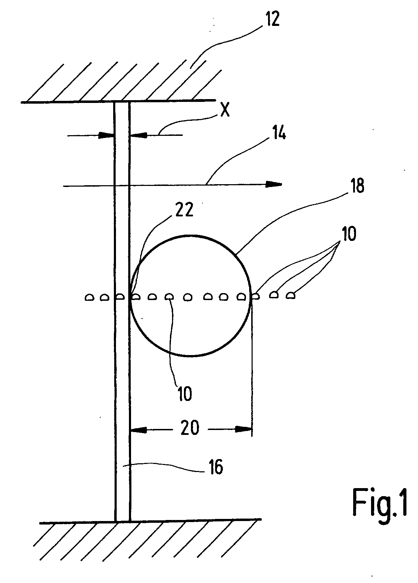

Das erfindungsgemäße Verfahren dient zur Reduzierung der Durchflußabhängigkeit von Meßgeräten zur Bestimmung von Verunreingungen, insbesondere Feststoffverschmutzungen, in der Art von Partikeln 10 in Fluiden mit einem Partikelzähler - Sensor, der nach dem Abdunklungsprinzip mittels einer Lichtschrankenanordnung (Lichtblockade-Prinzip) Sensorsignale erzeugt, die die Anwesenheit von Partikeln 10 in einer Meßzone darstellen. Ein dahingehender Partikelzähler - Sensor ist beispielsweise bekannt durch das Europäische Patent 0 427 908 und dort näher beschrieben, so dass an dieser Stelle hierzu auf nähere Einzelheiten nicht eingegangen wird. Der Partikelzähler - Sensor (nicht dargestellt) ist Teil einer Meßzelle 12, von der in der Fig.1 nur noch die Wandbegrenzungen angegeben sind. Die Meßzelle 12 weist einen vorgebbaren Eintrittsquerschnitt für den Fluidstrom auf, wobei der Fluidstrom beispielsweise durch ein übliches Hydraulikmedium gebildet ist, das einzelne Feststoffverschmutzungen in Form von den genannten Partikeln 10 aufweist. Die Richtung des Fluidstromes ist in der Fig.1 mit einem Pfeil 14 wiedergegeben. Der genannte Partikelzähler - Sensor erzeugt eine Lichtstrahlquerschnittsfläche, die bei der bekannten Lösung mit 16 bezeichnet ist und bei der erfindungsgemäßen Lösung mit 18. Zur Detektierung der Verunreinigungen wird der Fluidstrom in Richtung des Pfeiles 14 über die dahingehenden Lichtstrahlquerschnittsflächen 16,18 geführt.

Bei der konventionellen Meßtechnik wird der Ansatz verfolgt, alle Partikel, die die Meßzelle 12 passieren, zu erfassen und die Lichtstrahlabmessung quer zur Strömungsrichtung 14 entspricht dem Öffnungs- oder Eintrittsquerschnitt für die Meßzelle 12. Die bekannte Lasersensoranordnung erzeugt mithin eine Lichtstrahlquerschnittsfläche 16, die im wesentlichen vorhangartig in der Art einer Meßlinie die Meßzelle 12 bis zu deren Begrenzungswände durchgreift. Üblicherweise wird die für den Flüssigkeitsstrom wirksame Eintritts- oder Öffnungsquerschnittsfläche für die Meßzelle 12 derart groß gewählt, dass die enthaltenen Verschmutzungspartikel 10 die Meßzelle 12 jedenfalls nicht verstopfen können und in der Praxis hat sich gezeigt, dass ein quadratischer Öffnungsquerschnitt von 500 *µ*m-Länge auf 500 *µ*m-Breite zu guten verwertbaren Resultaten führt. Um nun Partikel 10 mit einer Größe von 4*µ*m erfassen zu können, weist der typische Lasersensor mit seinem Lichtstrahlvorhang dann eine Meßlänge oder Meßbreite von jeweils 500 *µ*m auf, was den genannten Abmessungen der Meßzelle 12 bezogen auf ihren Eintrittsquerschnitt entspricht, und die Breite X der Lichtstrahlquerschnittsfläche 16, gemessen in Blickrichtung auf die Fig.1 gesehen, entspricht ungefähr 4*µ*m, um beispielsweise 4*µ*m-Partikel 10 erfassen zu können. Damit weist die bekannte Lichtstrahlquerschnittsfläche 16 ca. 2000*µ*m² auf.

Wollte man nun bei der bekannten Lösung die Partikelgröße noch kleiner wählen, beispielsweise in der Größenordnung von 2*µ*m, darf die Lichtstrahlabmessung in Strömungsrichtung gleichfalls nur noch wenige *µ*m betragen, was zur Folge hat, dass bei den erforderlichen Strömungsgeschwindigkeiten innerhalb der Meßzelle 12 und in den Zuführleitungen (nicht dargestellt), um Partikelsedimentation zu verhindern, Partikelmeßsignale mit einer Dauer von nur ungefähr 1*µ*s entstehen, deren Auswertung ausgesprochen schwierig ist. Um dahingehende kurze Partikelsignale noch zu erfassen, ist eine sehr große Bandbreite von nachgeordneten Verstärkerstufen notwendig, und sind diese nicht vorhanden, muß der Durchfluß und damit die Signalfrequenz in einem engen Bereich konstant gehalten werden.

Bei der erfindungsgemäßen Anordnung wird eine Lichtstrahlquerschnittsfläche 18 mit gleicher Querschnittsfläche von 2000*µ*m² erzeugt, die vorzugsweise dadurch entsteht, dass der Partikelzähler - Sensor eine im wesentlichen kreisförmige Lichtstrahlquerschnittsfläche 18 erzeugt, wobei für den Erhalt der genannten Querschnittsfläche ein Querschnitt bzw. ein Durchmesser des Lichtstrahles von ca. 50*µ*m genügt. Mit der Lichtstrahlquerschnittsfläche 18 nach der Erfindung wird also nicht der komplette Öffnungsquerschnitt, wie bei der bekannten Lösung, ausgeleuchtet, dafür aber in Strömungsrichtung 14 eine deutlich größere Ausdehnung erreicht, so dass auch bei hohen Fluidgeschwindigkeiten zur Vermeidung von Partikelsedimentationen die Verweildauer innerhalb der Lichtstrahlquerschnittsfläche 18 genügt, um eine sichere Meßwerterfassung erreichen zu können. Dabei ist es für einen Durchschnittsfachmann auf diesem Gebiet überraschend, dass er mit nur einer partiellen Meßstelle bessere Meßergebnisse erreicht, als wenn er den gesamten Meßzellenquerschnitt mit der Lichtblockadeschranke "überstreicht".

In der vergrößert wiedergegebenen Darstellung nach der Fig.1 wird exemplarisch für ein Partikel 10 die Durchlaufstrecke 20 wiedergegeben und hieraus wird deutlich, dass sich für den jeweiligen Partikel 10 eine deutlich längere Verweilzeit innerhalb des kreisrunden Lichtstrahls mit der zugehörigen Querschnittsfläche 18 ergibt. Dadurch, dass in Richtung 14 des Fluidstromes bei dem erfindungsgemäßen Meßwerteverfahren die Lichtstrahlquerschnittsfläche 18 größer gewählt wird als quer dazu bezogen auf die Eintrittsstelle 22 der Verunreinigung in diese Lichtstrahlquerschnittsfläche 18, lassen sich auch ausgesprochen kleine Partikel, beispielsweise mit einer Größe von ca. 2*µ*m, ohne weiteres verfolgen und sicher detektieren. Das dahingehende Verfahren zur Reduzierung der Durchflußabhängigkeit von Meßgeräten der genannten Art setzt voraus, dass zumindest vom statistischen Durchschnitt her die zu detektierenden Partikel 10 gleichförmig im Fluidstrom sich aufhalten, um an einer partiellen Meßstelle eine sichere Detektierung für den Verschmutzungsgrad des Fluids vornehmen zu können.

Bei nicht weiter dargestellten Ausführungsformen kann anstelle einer kreisrunden Lichtstrahlquerschnittsfläche 18 auch eine quadratische oder sonstwie längliche Form, wie ein Oval od. dgl., eingesetzt werden; immer unter der Voraussetzung, dass eine deutliche Längenausdehnung parallel in Richtung 14 des Fluidstromes erfolgt, der die Meßzelle 12 passiert. Des weiteren ist aufgrund der derart länglich ausgerichteten Lichtstrahlquerschnittsfläche 18 eine wesentlich bessere Messung, insbesondere bei länglichen Partikeln 10, ermöglicht, und die Partikelgröße läßt sich definieren als Durchmesser eines Kreises mit gleicher Fläche wie die Projektion des beliebig geformten Partikels. Demgemäß erlaubt ein linienförmiger Strahlquerschnitt nach dem Stand der Technik keine Größenbestimmung gemäß dieser Definition allein aus dem Maximum des Signals.

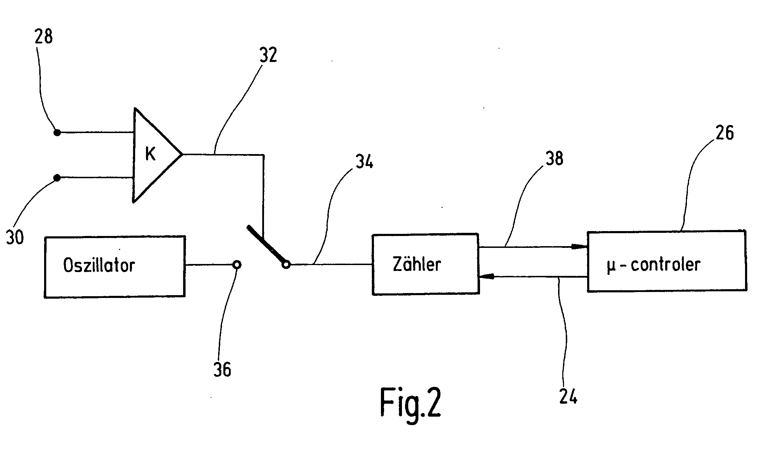

In der Fig.2 ist eine entsprechende Auswerteschaltung für die Sensorsignale des Partikelzähler - Sensors dargestellt. Als Ausgangssignal, welches zu verarbeiten ist, kann beispielsweise ein pulsdauer-moduliertes Rechtecksignal dienen und im Folgenden wird anhand der Fig.2 ein digitales Auswerteverfahren für die Erzeugung dieses Ausgangssignals näher erläutert.

In der Fig.2 ist mit 24 ein vom Taktgeber eines *µ*-Controler 26 zugeführtes, einen vorgegebenen Zeitraum definierendes Zeitsignal bezeichnet, mit 28 das Sensorsignal des Partikelzähler - Sensors, mit 30 ein Schwellenwertsignal, mit 32 ein durch Komparation aus 28 und 30 erzeugtes Komparatorausgangssignal und mit 34 sind Zählsignalimpulse symbolisiert, die bei durch das Komparatorausgangssignal 32 freigegebenen Oszillatorimpulsen 36 in Erscheinung treten. Ferner wird mit 38 bezeichnet die Summe aller Zählimpulse des Zählers, die an den *µ*-Controler 26 weitergegeben werden.

Bei einem dahingehenden Auswerteverfahren für den Partikelzähler, bei dem mittels des Sensors, der auf die Anwesenheit von Partikeln 10 in einer von dem Fluidstrom durchströmten Meßzone anspricht, wird ein Sensorsignal 28 erzeugt, das mittels einer nicht näher dargestellten Signalverarbeitungseinrichtung aufbereitet und unter Berücksichtigung zumindest eines Kalibrierfaktors in einen Anzeigewert überführt wird. Die Aufbereitung des Sensorsignals 28 wird so durchgeführt, dass innerhalb eines vorgegebenen Zeitraums T die individuellen Verweilzeiten der Partikel 10 in der Meßzone in Form der Lichtstrahlquerschnittsfläche 18 ermittelt werden und durch Summation der Verweilzeiten wird ein Summensignal als Rohsignal gebildet und dieses unter Berücksichtigung des zumindest einen Kalibrierfaktors zur Darstellung des Anzeigewertes benutzt.

Ein dahingehendes Auswerteverfahren für einen Partikelzähler ist im Einzelnen in der DE 197 35 066 C1 beschrieben, so dass an dieser Stelle im Detail hierauf nicht mehr näher eingegangen wird.

Mit dem erfindungsgemäßen Verfahren sowie der Vorrichtung zur Durchführung des Verfahrens ist es nicht nur möglich, kleinste Partikel sicher als Verschmutzung noch zu detektieren, sondern es besteht darüber hinaus auch die Möglichkeit, Luftblasen im Fluidstrom zu erkennen, um zulässige Aussagen über die Qualität des Fluids zu gewinnen, die sich aus unterschiedlichen Partikel-Geometrien ergeben.

## Patentansprüche

1. Verfahren zur Reduzierung der Durchflußabhängigkeit von Meßgeräten zur Bestimmung von Verunreinigungen, insbesondere Feststoffverschmutzungen in der Art von Partikeln (10) in Fluiden mit einem Partikelzähler - Sensor, der insbesondere nach dem Lichtblockade - Prinzip arbeitet und der in einer Meßzelle (12) angeordnet ist, die einen vorgebbaren Eintrittsquerschnitt für den Fluidstrom aufweist, wobei der Sensor nur eine einzige, durchgehende Lichtstrahlquerschnittsfläche (16,18) erzeugt, über die zur Erkennung der Verunreinigung der Fluidstrom geführt wird, wobei die Aufbereitung eines Sensorsignals (28) so durchgeführt wird, dass innerhalb eines vorgegebenen Zeitraums (T) die individuellen Verweilzeiten der Partikel (10) in der Meßzone in Form der Lichtstrahlquerschnittsfläche (18) ermittelt werden, und wobei durch Summation der Verweilzeiten ein Summensignal als Rohsignal gebildet und dieses unter Berücksichtigung zumindest eines Kalibrierfaktors zur Darstellung des Anzeigewertes benutzt wird, **dadurch gekennzeichnet, dass** die Lichtstrahlquerschnittsfläche (18) des Partikelzähler - Sensors nach allen Seiten gleichförmig verlaufend ausgebildet wird, insbesondere in der Art eines Quadrats, eines Ovals oder vorzugsweise in der Art eines Kreises, und dass in Richtung (14) des Fluidstromes die ununterbrochene Erstreckung der Lichtstrahlquerschnittsfläche (18) deutlich größer gewählt wird als quer dazu zumindest bezogen auf die Eintrittsstelle (22) der Verunreinigung in die Lichtstrahlquerschnittsfläche (18), und dass die Erstreckung der Lichtstrahlquerschnittsfläche (18) quer zur Richtung (14) des Fluidstromes deutlich kleiner ist als die Breite des Fluidstromes in dieser Richtung (14).

2. Verfahren nach Anspruch 1, **dadurch gekennzeichnet, dass** der Eintrittsquerschnitt der Meßzelle (12) derart groß bemessen wird, dass eine Verstopfung durch die eintretenden Verschmutzungspartikel (10) vermieden wird.

3. Verfahren nach Anspruch 1 oder 2, **dadurch gekennzeichnet, dass** die durch den Partikelzähler - Sensor erfaßten Rohsignale, die sich beim Durchströmen der Lichtstrahlquerschnittsfläche (18) ergeben, an eine Signalverarbeitungseinrichtung weitergeleitet werden.

4. Verfahren nach Anspruch 3, **dadurch gekennzeichnet, dass** das Sensorsignal (28) mittels einer Komparatorschaltung in ein die Verweilzeiten unter Berücksichtigung eines vorgegebenen Schwellenwertes darstellendes Komparatorausgangssignal (32) überführt wird und dass dieses für die Summation der Verweilzeiten benutzt wird.

5. Verfahren nach Anspruch 4, **dadurch gekennzeichnet, dass** die Summation der Verweilzeiten in der Weise durchgeführt wird, dass Oszillatorimpulse (36) gezählt werden, die innerhalb des vorgegebenen Zeitraums nach Maßnahme des Komparatorausgangssignals (32) freigegeben werden.

6. Verfahren nach Anspruch 4, **dadurch gekennzeichnet, dass** bei der Summation der Verweilzeiten so vorgegangen wird, dass durch Integration des Komparatorausgangssignals (32) innerhalb des vorgegebenen Zeitraums erzeugte Signalwerte aufsummiert werden.

7. Verfahren nach Anspruch 6, **dadurch gekennzeichnet, dass** die aufsummierten Signalwerte mittels eines Analog-Digital-Wandlers digitalisiert werden.

8. Vorrichtung zum Durchführen des Verfahrens nach einem der Ansprüche 1 bis 7, wobei sie eine Meßzelle (12) mit vorgebbarem Eintrittsquerschnitt für das Fluid aufweist, und wobei der in der Meßzelle (12) angeordnete Partikelzähler - Sensor nur eine einzige, durchgehende Lichtstrahlquerschnittsfläche (18) erzeugt, **dadurch gekennzeichnet, dass** die Lichtstrahlquerschnittsfläche (18) nach allen Seiten gleichförmig verlaufend ausgebildet ist, insbesondere in der Art eines Quadrats, eines Ovals oder vorzugsweise in der Art eines Meßkreises, die in Richtung (14) des Fluidstromes mit ihrer ununterbrochenen Erstreckungsrichtung deutlich größer gewählt ist als quer dazu zumindest bezogen auf die Eintrittsstelle (22) der jeweiligen Verunreinigung (Partikel (10)) in die Lichtstrahlquerschnittsfläche (18) und dass die Erstreckung der Lichtstrahlquerschnittsfläche (18) quer zur Richtung (14) des Fluidstromes deutlich kleiner ist als die Breite des Fluidstromes in dieser Richtung.

## Claims

1. A method for reducing the flow dependence of measuring appliances for determining impurities, in particular solid contaminants, in the form of particles (10) in fluids with a particle counter sensor that works in particular according to the light blockade principle and that is disposed in a measuring cell (12) that has a pre-definable inlet cross-section for the flow of fluid, the sensor only generating a single continuous light beam cross-sectional area (16,18) via which the flow of fluid is guided in order to identify the impurity, a sensor signal (28) being produced such that the individual dwell times of the particles (10) in the measuring zone in the form of the light beam cross-sectional area (18) are determined within a pre-defined period of time (T), and a sum signal being formed as a raw signal by adding up the dwell times, and this being used to show the display value in consideration of at least one calibration factor, **characterised in that** the light beam cross-sectional area (18) of the particle counter sensor is formed so as to extend uniformly to all sides, in particular in the form of a square, an oval or preferably in the form of a circle, and that in the direction (14) of the flow of fluid the uninterrupted extension of the light beam cross-sectional area (18) is chosen to be clearly larger than transversely to the latter, at least in relation to the entry point (22) of the impurity into the light beam cross-sectional area (18), and that the extension of the light beam cross-sectional area (18) transversely to the direction (14) of the flow of fluid is clearly smaller than the width of the flow of fluid in this direction (14).

2. The method according to Claim 1, **characterised in that** the inlet cross-section of the measuring cell (12) has dimensions such that clogging by the incoming contaminant particles (10) is avoided.

3. The method according to Claim 1 or 2, **characterised in that** the raw signals detected by the particle counter sensor and which are produced upon flowing through the light beam cross-sectional area (18), are forwarded to a signal processing device.

4. The method according to Claim 3, **characterised in that** the sensor signal (28) is converted by means of a comparator circuit into a comparator output signal (32) displaying the dwell times taking into account a pre-defined threshold value, and that this is used for adding up the dwell times.

5. The method according to Claim 4, **characterised in that** the dwell times are added up in such a way that oscillator pulses (36) are counted that are released within the pre-defined period of time according to the comparator output signal (32).

6. The method according to Claim 4, **characterised in that** for the adding up of the dwell times one proceeds such that signal values that are generated are added up by integrating the comparator output signal (32) within the predetermined period of time.

7. The method according to Claim 6, **characterised in that** the signal values that are added up are digitalised by means of an analogue to digital converter.

8. A device for implementing the method according to any of Claims 1 to 7, it having a measuring cell (12) with a pre-definable inlet cross-section for the fluid, and the particle counter sensor disposed in the measuring cell (12) generating only a single, continuous light beam cross-sectional area (18), **characterised in that** the light beam cross-sectional area (18) is formed such as to extend uniformly to all sides, in particular in the form of a square, an oval or preferably in the form of a measuring circle that is chosen to be clearly larger in the direction (14) of the flow of fluid with its uninterrupted extension direction than transversely to the latter, at least in relation to the entry point (22) of the respective impurity (particle (10)) into the light beam cross-sectional area (18), and that the extension of the light beam cross-sectional area (18) is clearly smaller transversely to the direction (14) of the flow of fluid than the width of the flow of fluid in this direction.

## Revendications

1. Procédé de réduction de la dépendance au débit d'appareils de mesure pour déterminer des souillures, notamment des salissures de matière solide à la manière de particules (10) dans des fluides, comprenant un compteur-capteur de particules, qui fonctionne notamment suivant le principe du blocage de la lumière et qui est monté dans une cellule (12) de mesure, qui a une section transversale d'entrée pouvant être donnée à l'avance pour le courant de fluide, le capteur produisant seulement une surface (16, 18) de section transversale continue unique d'un faisceau lumineux, par laquelle le courant de fluide passe pour la détection de la souillure, le traitement d'un signal (28) du capteur étant effectué de manière à déterminer, dans un laps de temps (T) donné à l'avance, les temps de séjour individuels des particules (10) dans la zone de mesure sous la forme de la surface (18) de section transversale du faisceau lumineux, et dans lequel il est formé, par sommation des temps de séjour, un signal somme comme signal brut et celui-ci est utilisé en tenant compte au moins d'un facteur d'étalonnage pour représenter la valeur d'affichage, **caractérisé en ce que** la surface (18) de section transversale du faisceau lumineux du compteur-capteur de particules s'étend d'une manière uniforme de tous les côtés, notamment à la manière d'un carré, d'un ovale ou, de préférence, à la manière d'un cercle, et **en ce que**, dans la direction (14) du courant de fluide, l'étendue ininterrompue de la surface (18) de section transversale du faisceau lumineux est choisie nettement plus grande que transversalement à cela, au moins rapporté au point (22) d'entrée de la souillure dans la surface (18) de section transversale du faisceau lumineux, et **en ce que** l'étendue de la surface (18) de section transversale du faisceau lumineux transversalement à la direction (14) du courant de fluide est nettement plus petite que la largeur du courant de fluide dans cette direction (14).

2. Procédé suivant la revendication 1, **caractérisé en ce que** la section transversale d'entrée de la cellule (12) de mesure est grande, de manière à empêcher un engorgement par les particules (10) de saleté entrantes.

3. Procédé suivant la revendication 1 ou 2, **caractérisé en ce que** les signaux bruts détectés par le compteur-capteur de particules, qui proviennent du passage de la surface (18) de section transversale du faisceau lumineux, sont acheminés à un dispositif de traitement du signal.

4. Procédé suivant la revendication 3, **caractérisé en ce que** le signal (28) du capteur est transformé au moyen d'un circuit comparateur en un signal (32) de sortie de comparateur représentant les temps de séjour en tenant compte d'une valeur de seuil donnée à l'avance et **en ce que** ce signal de sortie est utilisé pour la sommation des temps de séjour.

5. Procédé suivant la revendication 4, **caractérisé en ce que** la sommation des temps de séjour est effectuée de manière à compter des impulsions (36) d'oscillateur, qui sont libérées dans le laps de temps donné à l'avance, en fonction du signal (32) de sortie du comparateur.

6. Procédé suivant la revendication 4, **caractérisé en ce que**, dans la sommation des temps de séjour, on procède en sommant, par intégration du signal (32) de sortie du comparateur, des valeurs de signal produites dans le laps de temps donné à l'avance.

7. Procédé suivant la revendication 6, **caractérisé en ce qu'**on numérise les valeurs de signal sommées au moyen d'un convertisseur analogique-numérique.

8. Dispositif pour effectuer le procédé suivant l'une des revendications 1 à 7, dans lequel une cellule (12) de mesure a une section transversale d'entrée donnée à l'avance pour le fluide et dans lequel le compteur-capteur de particules monté dans la cellule (12) de mesure produit seulement une surface (18) de section transversale de faisceau lumineux continue unique, **caractérisé en ce que** la surface (18) de section transversale de faisceau lumineux s'étend uniformément de tous côtés, en étant notamment à la manière d'un carré, d'un ovale ou, de préférence, à la manière d'un cercle de mesure, qui est choisi nettement plus grand dans la direction (14) du courant de fluide par sa direction d'étendue ininterrompue que transversalement à cela, au moins rapporté au point (22) d'entrée de la salissure (particule(10)) dans la surface (18) de section transversale du faisceau lumineux, et **en ce que** l'étendue de la surface (18) de section transversale du faisceau lumineux transversalement à la direction (14) du courant de fluide est nettement plus petite que la largeur du courant de fluide dans cette direction.
